# EUROPEAN PATENT SPECIFICATION

(11) **EP 0 627 300 B1**
(45) Date of publication and mention of the grant of the patent: **18.03.1998**
(21) Application number: 93108916.3
(22) Date of filing: 03.06.1993
(51) Int. Cl.: B29C 65/08, B42F 7/02, G03B 21/132

(54) **Process for welding plastic sheets and shaped articles obtained therefrom**
Verfahren zum Schweissen von Kunststoffolien und daraus geformte Artikel
Procédé de soudage de feuilles en matière plastique et articles ainsi obtenus

(43) Date of publication of application: 07.12.1994
(73) Proprietor: MINNESOTA MINING AND MANUFACTURING COMPANY, St. Paul, Minnesota 55133-3427 (US)
(72) Inventor: Cataldo, Massimo Antonio, Caserta (IT); Salvestrini, Luciano, Caserta (IT)
(74) Representative: Hill, Cecilia Ann

(56) References cited:
- EP-A- 0 141 667
- EP-A- 0 256 509
- EP-A- 0 542 531
- US-A- 4 244 762
- US-A- 4 770 730
- ZENTRALVERBAND DER ELEKTROTECHNISCHEN INDUSTRIE 'Fügen von Formteilen und Halbzeugen aus thermoplstischen Kunststoffen mit Ultraschall', 1985, FACHVERBAND ELEKTROSCHWEISSGEROTE, FRANKFURT (GERMANY) * page 9, chapter 3.2.1, page 11 chapter 3.3.1 *
- PATENT ABSTRACTS OF JAPAN vol. 14, no. 291 (M-989)(4234) 22 June 1990 & JP-A-02 092 519 (EIJI FUJITA) 3 April 1990

## Description

### FIELD OF THE INVENTION

This invention relates to a process for welding plastic sheets when a paper sheet is superposed to said plastic sheets, and a shaped articles obtained with said process.

### BACKGROUND

Processes and apparatus for welding plastic sheet materials are known in the art. Usually, the plastic sheets are heat joined along a seam line by passing together between an anvil and a sealing head and heating the plastic sheets by ultrasound, conduction or frictional heating, as described in GB Patent Application 2,149,343. Usually, the ultrasonic welding process consists in the steps of generating electrical energy, converting it in ultrasonic energy by a transducer and emitting said ultrasonic energy by a horn; said energy allows the plastic sheets to be sealed one to the other when they are pressed between a hard anvil and the ultrasonic horn for a predetermined period of time.

Ultrasonic welding process has been used to seal together transparent plastic sheet materials to obtain, for example, an envelope for transparencies for overhead projectors and like projecting apparatus, as those described in EP Patent 47,306.

When paper sheets are superposed to the plastic sheet materials before said sheets are sealed, the usual ultrasonic welding process binds the paper sheets to the plastic sheets with bad results in terms of functionality. In fact, the adhesion of the paper sheet to the plastic sheets must be as minimum as possible in order not to produce marks or scratches.

It is desirable to obtain a welding process that solves said problem of adhesion of the paper sheets to the plastic sheets, still maintaining the good performance of welding of the plastic sheets.

An object of the present invention is to provide a process for welding plastic sheets, when a paper sheet is superposed to one of said sheets, so that the plastic sheets are sealed by sealing means that operate through said paper sheet, without creating adhesion of the paper sheet to the plastic sheets.

Another object of the present invention is to provide shaped articles comprising at least two plastic sheets sealed one to the other and at least a paper sheet superposed to one of said sheets, wherein said shaped articles have been obtained through a process for welding said plastic sheets through said paper sheet.

Still another object of the present invention is to provide an envelope, for transparencies for overhead projectors, said envelope comprising a substantially rectangular pocket of transparent plastic sheet material superposed by at least one paper flap to substantially cover all the surface of the transparency to be inserted into the envelope, at least one edge of said envelope having been sealed by a process for welding the transparent plastic sheets through said paper flap.

### SUMMARY OF THE INVENTION

The present invention refers to a process for welding along a desired seam line two plastic sheets, through a paper sheet superposed to a first of said plastic sheets, comprising:
a) placing the two plastic sheets with the superposed paper sheet between anvil means in contact with the second plastic sheet and ultrasonically powered horn means in contact with the paper sheet, said anvil means having a knurled surface and said horn means having a plain surface,
b) subjecting the plastic and paper sheets to a pressure in the range of from 0.2 to 2.0 bar between the anvil means and the horn means, and
c) activating the horn means by ultrasonics with a supply power of at least 1.2 Kw for a welding time in the range of from 80 to 300 milliseconds to weld together the two plastic sheets along said desired seam line.

### BRIEF DESCRIPTION OF THE DRAWINGS

Figure 1 is a perspective view of an overhead projector on the stage of which there is placed an envelope according to the invention in unfolded position.

Figure 2 is a plan view of the envelope in folded position.

Figure 3 is a section on line III-III in Figure 2.

Figure 4 is a plan view of the envelope in unfolded position.

Figure 5 is a section view on line V-V of Figure 4.

### DETAILED DESCRIPTION OF THE INVENTION

The plastic sheets for use in the present invention comprise fusible films of thermoplastic polymers, such as, for example, acrylonitrile-butadiene-styrene polymers, acetate polymers, cellulose ester polymers, polymethylmethacrylate, polyamide, polycarbonate, polyester (such as polyethylene terephthalate, and the like), polyvinylchloride, polysulfone, polyethylene, polypropylene, styrene-butadiene polymers, styrene-acrylonitrile polymers, prefer-ably polyester or polypropylene. Preferably, they are antistatic and antiadhesion treated in order not to attract dust. The thickness of the sheet material is preferably in the range of from 30 to 100 µm.

The two plastic sheets, with the paper sheet superposed to a first of said plastic sheet, are placed between anvil means, in contact with the second plastic sheet, and horn means in contact with the paper sheet. By this way, the ultrasonic energy emitted by the horn means passes through the paper sheet superposed to the first plastic sheet before reaching the two plastic sheets.

The surface of the anvil means must be knurled in order to help the ultrasonic welding process, reducing the ultrasonic dispersion to the minimum and maximizing the energy transfer to the plastic sheets. Preferably, the surface of the anvil is realized by a series of consecutive sharp pyramids, the pyramids being triangolar, exagonal or the like. The sharp shape of the pyramids is preferred to facilitate the welding of the tranparent plastic sheet. The surface of the anvil realized by such pyramids is such that there are at least 100, preferably at least 200 sharp pyramids per square centimeter of the anvil surface.

On the contrary, the surface of the horn means must be as plain as possible, without any protuberances and corners; in fact, the horn is in direct contact with the paper sheet and a knurled surface of the horn could cause the formation of unwanted marks and scratches. The anvil is preferably made of a hard material, such as hardened steel, while the horn is generally made of titanium or the like.

To reduce to the minimum the formation of such unwanted effects, it is desirable to insert, between the paper sheet and the plastic first sheet, a felt covered metal shoe wich detaches the weak bondage remaining from the welding process between paper sheet and plastic sheets. The felt covering the metal shoe prevents the formation of scratches.

The pressure present on the plastic and paper sheets between the anvil means and the horn means is in the range from 0.2 to 2.0 bar, preferably in the range from 0.6 to 1.6 bar.

Electrical energy is generated by a power supply of at least 1.2 Kw, preferably of at least 1.5 Kw. The electrical energy is converted into ultrasonic energy by transducer means. Said ultrasonic energy pass from the transducer to horn means through a booster, which amplifies the intensity of the ultrasonic energy. Then the horn means emits the ultrasonic energy to weld the two plastic sheets.

The welding time is set up in such a way that the energy emitted by the horn and transferred to the plastic sheets is sufficient, in that period of time, to complete the welding process of the two plastic sheets. Said period of time is in the range from 80 to 300 milliseconds, preferably in the range from 150 to 250 milliseconds.

Another object of the present invention is to provide shaped articles comprising two plastic sheets welded along a desired seam line and a paper sheet superposed to a first of said plastic sheets, wherein the two plastic sheets have been welded through the superposed paper sheet by the process described hereinabove comprising:
a) placing the two plastic sheets with the superposed paper sheet between anvil means in contact with the second plastic sheet and ultrasonically powered horn means in contact with the paper sheet, said anvil means having a knurled surface and said horn means having a plain surface,
b) subjecting the plastic and paper sheets to a pressure in the range of from 0.2 to 2.0 bar between the anvil means and the horn means, and
c) activating the horn means by ultrasonics with a supply power of at least 1.2 Kw for a welding time in the range of from 80 to 300 milliseconds to weld together the two plastic sheets along said desired seam line.

The two plastic sheets, for ultrasonic welding through the paper sheet, may be either distinct or formed by folding a large sheet.

Still another object of the present invention is to provide an envelope for transparencies for overhead projectors, said envelope comprising a substantially rectangular pocket of transparent sheet material having two longitudinal side edges connected by shorter side edges, which is open at least along one side edge for insertion of the transparency to be presented therebetween, said envelope further comprising at least one paper flap attached to the envelope in a foldable manner to one of the longitudinal side edges of the pocket; said paper flap(s), in the folded position, covering at least 95% of the transparency and, in the unfolded position, exposing said transparency. Holes may be punched along the side edge of the sheet material to permit storage of the envelope in a binder, file or the like. The paper flaps can be used to contain written text.

In said envelope, the side edge opposite to the open side edge is welded through the superposed paper flap along a desired seam line by the process comprising:
a) placing the two plastic sheets with the superposed paper sheet between anvil means in contact with the second plastic sheet and ultrasonically powered horn means in contact with the paper sheet, said anvil means having a knurled surface and said horn means having a plain surface,
b) subjecting the plastic and paper sheets to a pressure in the range of from 0.2 to 2.0 bar between the anvil means and the horn means, and
c) activating the horn means by ultrasonics with a supply power of at least 1.2 Kw for a welding time in the range of from 80 to 300 milliseconds to weld together the two plastic sheets along said desired seam line.

In some cases, it is necessary to use a stack of envelopes, each envelope containing transparencies to be presented. The envelopes for transparencies for overhead projectors as described in Patent No. EP 47,306, wherein the opaque flaps cover only part of the transparency contained in the envelope, have the disadvantage that, in order to be able to read the transparency before it is put on the overhead projector for the presentation, it is necessary to insert in the stack a series of white paper sheets to separate one envelope from the following one. In fact, due to the fact that the plastic sheets and the transparencies are all transparent, the contents of all the transparencies is visible, making impossible the reading of only the first transparency on the top of the stack.

The envelopes of the present invention solve this problem: in fact, the flaps substantially cover all the surface of the transparency. By this way, before the envelope is put on the overhead projector for the presentation, when the flaps of the envelope at the top of the stack are in the unfolded position, it is possible to read the content of the transparency contained in said envelope, because the remaining transparencies in the stack are covered by the flaps in the folded position of all the remaining envelopes.

In addition, the envelope of the present invention has the same advantages already shown by the envelopes described in Patent No. EP 47,306, in terms of easy and efficiently handling, protection against dust and dirt, and the like.

In a preferred embodiment, there are two flaps each of them substantially covers one half of the surface of the transparency contained in the envelope, so that the two flaps substantially cover all the surface of the transparency contained in the envelope. "Substantially" in this invention means that the flaps cover at least 95% of the surface of the transparency flap.

The invention will be described with more details hereinbelow, referring to the accompanying drawings and examples which illustrate preferred embodiments.

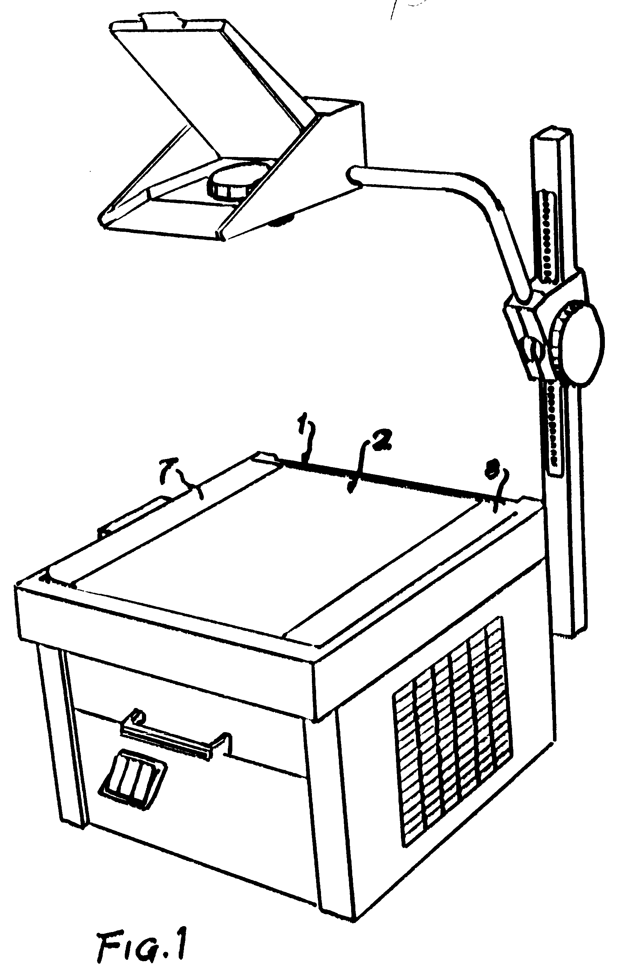

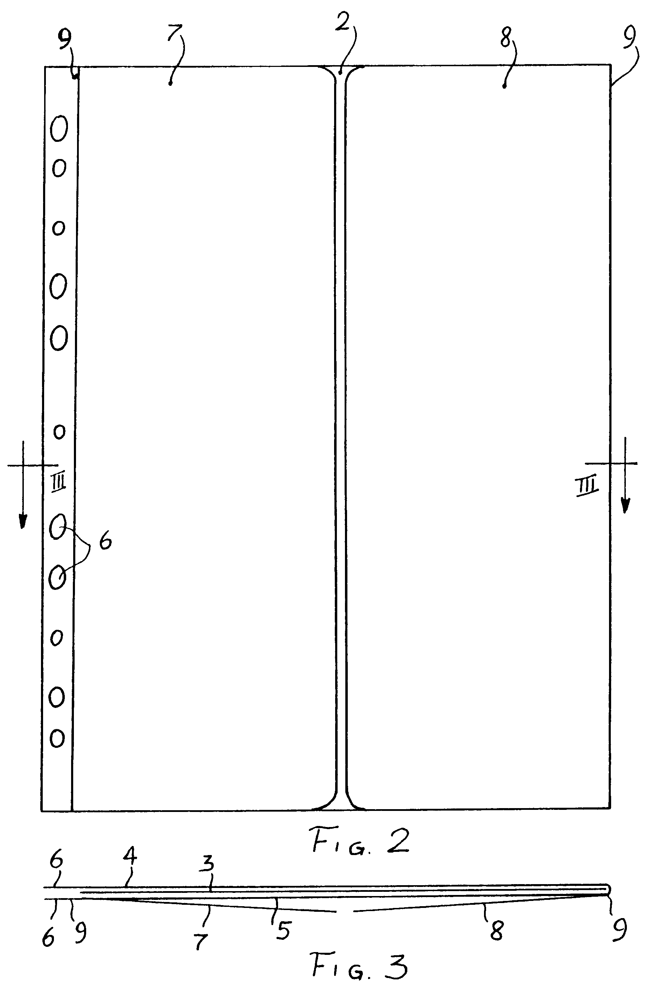

Figure 1 shows an overhead projector ***1*** of the kind used for educational and lecturing purposes for the projection of images on a screen. An envelope ***2*** is placed on the horizontal stage of the overhead projector and said envelope encloses a transparency ***3*** to be presented. The position of the transparency 3 in said envelope is shown in Figure 3. The envelope 1 and the transparency 3 are substantially rectangular and the envelope is slightly larger than the transparency both in width and preferably also in length. In the embodiment shown in Figures 1, 2 and 3 the envelope 1 comprises a pocket which consists of two sheets ***4, 5*** of transparent plastic material, preferably 60 µm polyester or polypropylene, said sheets being joined together at least along one side or formed by folding a large sheet to form the sheets 4 and 5 of the envelope. Preferably, the plastic material is antistatic and antiadhesion treated in order not to attract dust and in order that text on the transparency 3 should not picked up by the sheets 4, 5 of the pocket. Holes ***6*** may be punched along the side edge of the sheet material to permit storage of the envelope in a binder, file or the like.

Two opaque, substantially rectangular elongated flaps ***7, 8*** are attached in a foldable manner to the outer side of one sheet 5 of the pocket or envelope. The flaps are formed of paper material which accepts written text by conventional writing applicances. Further, the flaps are connected to the sheets 5 of the envelope such they are readily folded from the unfolded position shown in Figure 1 to the folded position shown in Figures 2 and 3, and viceversa. The flaps 7, 8 are attached to the sheet 5 by flexible adhesive tape or by a foldable weld or flute 9. Naturally, the flaps can be connected to the sheet 5 in some other manner, provided that it produced a so-called hinge effect. The two flaps 7,8 are superposed to the outer side of one sheet 5 in such a way that they substantially cover all the surface of the transparency 3.

The flaps according to the proposed embodiment of the invention may be of course arranged either on the front side of the envelope, as shown in the drawings, or else the flaps may be arranged on the back side of the envelope.

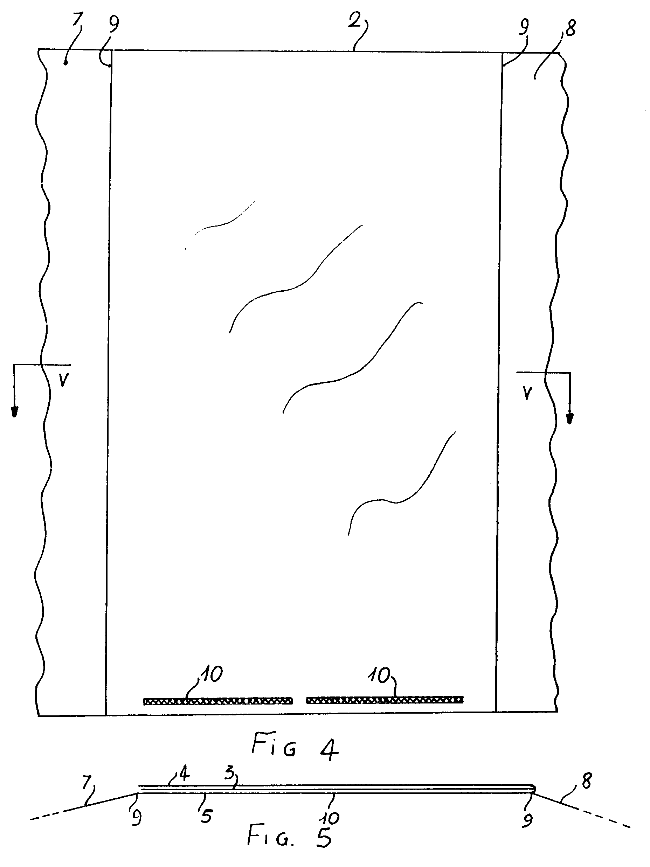

Figure 4 shows the envelope 2 having the flaps 7, 8 in the unfolded position. It is clearly visible the mark 10 where the two plastic sheets have been welded one to the other through the paper flap according to the welding process of the present invention.

The embodiment described above relates to an envelope which has two paper flaps each of which is attached to one longitudinal side of the envelope. In another preferred embodiment, not shown, the envelope has but one flap which is attached to that longitudinal side edge which may be provided with punched holes and which is so large that in the folded state it covers substantially the whole surface of the transparency contained in the envelope.

### EXAMPLE 1

Two substantially rectangular elongated paper flaps were independently superposed to a rectangular polyester sheet and attached in a foldable manner with a flexible adhesive tape to the longitudinal side edges of the polyester sheet, in such a way that they were adjacent one to the other and each of them substantially covered one half of the surface of the sheet, so that the two flaps substantially covered all the surface of the sheet as shown in Figure 2.

The sheet having the two paper flaps superposed thereto was put on a second sheet of the same dimension, with no flaps, and they all together were put between an anvil and a horn to be sealed. The second sheet was in contact with the anvil, while the flaps superposed to the first sheet was in the farthest position from the anvil, in contact with the horn. The anvil, made of hardened steel, had a knurled surface realized by a series of consecutive sharp pyramids, each pyramid having a base formed by edges of 0.8 mm and a height of 0.5 mm, while the surface of the horn was completely plain. The horn was made of titanium.

A power supply of the PCS II type manufactured by Rinco Ultrasonics Ltd., having a maximum power supply of 2 Kw, was used to generate electrical energy. An actuator of the V20-100 type manufactured by Rinco Ultrasonics Ltd. was used: the actuator consisted in a transducer, to convert the electrical energy in ultrasonic energy, a booster, to amplify said ultrasonic energy, and the horn to apply the amplified ultrasonic energy to the plastic sheets to be sealed. The power supply was in the range from 0.9 Kw to 1.8 Kw; the welding time was fixed at 200 milliseconds and the pressure was fixed at 1.0 bar.

By varying the energy power to be transferred to the product, it was possible to detect which were the working conditions useful for the welding process. A dynamometer of the type Model 1000 Instron Machine was used to detect the weld strength of the polyester sheets welded through the paper flap, measured in grams for millimeters: higher is the number obtained, higher is the weld strength. Samples of polyester sheets were cut in pieces of 3x0.25 inches and then fixed at the grips of the dynamometer to be measured, at a speed of 1 inch for minute. Results are shown in table 1. In the meantime, paper impressions as a consequence of the weld effect were evaluated through a visual test. Also these results are shown in table 1.

**Table 1**

| **Supplied Power Kw** | **Weld Strength g/6.35 mm.** | **Paper Impressions Visual** |
|---|---|---|
| 0.1-1.1 | 100 | not acceptable |
| 1.2-1.3 | 125 | acceptable |
| 1.3-1.4 | 150 | good |
| 1.4-1.8 | 200 | very good |

Table 1 shows that, considering both the weld strength and the paper impressions tests, the supplied energy to be transferred to the plastic sheets for the welding process must be at least 1.2 Kw and the best results are obtained when the supplied energy is at least 1.4 Kw.

### EXAMPLE 2

The welding process of Example 1 was repeated with a power supply fixed at 1.5 Kw. The welding time (measured in milliseconds) and the pressure between the anvil and the horn (measured in bar) was varied as shown in Table 2, where are also reported the data related to weld strength and paper impressions obtained as in Example 1.

**Table 2**

| **Pressure** | **Time** | **Strength** | **Paper Impressions** |
|---|---|---|---|
| 0.6 | 150 | 215 | very good |
| 0.6 | 200 | 300 | very good |
| 0.6 | 250 | 355 | very good |
| 0.6 | 300 | 440 | good |
| 0.8 | 150 | 285 | very good |
| 1.0 | 120 | 300 | very good |
| 1.0 | 140 | 330 | good |
| 1.0 | 150 | 410 | good |
| 1.0 | 160 | 375 | good |
| 1.2 | 150 | 415 | good |
| 1.4 | 150 | 525 | good |
| 1.6 | 150 | 470 | acceptable |

Table 2 shows that the pressure can vary in the range from 0.6 to 1.6 bar, obtaining good results both for weld strength and for paper impressions. In addition, Table 2 shows that the welding time can vary in the range from 100 to 300 milliseconds.

### EXAMPLE 3

The welding process of Example 1 was repeated changing the anvil profile. The surface of the anvil was realized by a series of consecutive truncated pyramids, each of them having the edges of the superior area of 0.5 mm. The fact that the surface was realized by truncated pyramids did not allow to obtain good welding results because the surface was not sharp enough. The welding strength was too weak and hence the results were not acceptable.

## Claims

1. Process for welding along a desired seam line two plastic sheets, through a paper sheet superposed to a first of said plastic sheets, comprising:
a) placing the two plastic sheets (4,5) with the superposed paper sheet (7,8) between anvil means in contact with the second plastic sheet (4) and ultrasonically powered horn means in contact with the paper sheet, said anvil means having a knurled surface and said horn means having a plain surface,
b) subjecting the plastic and paper sheets to a pressure in the range of from 0.2 to 2.0 bar between the anvil means and the horn means, and
c) activating the horn means by ultrasonics with a supply power of at least 1.2 Kw for a welding time in the range of from 80 to 300 milliseconds to weld together the two plastic sheets along said desired seam line (10).

2. Process for welding transparent plastic sheets as in claim 1, wherein the welding time is in the range from 150 to 250 milliseconds.

3. Process for welding transparent plastic sheets as in claim 1, wherein the supplied power is at least 1.5 Kw.

4. Process for welding transparent plastic sheets as in claim 1, wherein the pressure is in the range of from 0.6 to 1.6 bar.

5. Process for welding transparent plastic sheets as in claim 1, wherein the knurled surface of the anvil is realized by a series of sharp pyramids.

6. Process for welding transparent plastic sheets as in claim 1, wherein a felt covered metal shoe is inserted between the paper sheet and the first plastic sheet.

7. A shaped article comprising two plastic sheets welded along a desired seam line and a paper sheet superposed to a first of said plastic sheets, characterized in that the two plastic sheets have been welded through the superposed paper sheet by a process comprising:
a) placing the two plastic sheets (4,5)with the superposed paper sheet (7,8) between anvil means in contact with the second plastic sheet (4) and ultrasonically powered horn means in contact with the paper sheet, said anvil means having a knurled surface and said horn means having a plain surface,
b) subjecting the plastic and paper sheets to a pressure in the range of from 0.2 to 2.0 bar between the anvil means and the horn means, and
c) activating the horn means by ultrasonics with a supply power of at least 1.2 Kw for a welding time in the range of from 80 to 300 milliseconds to weld together the two plastic sheets along said desired seam line (10).

8. A shaped article according to claim 7, wherein said two plastic sheets are formed by folding a large sheet.

9. Envelope for transparencies for overhead projectors, said envelope (2) comprising a substantially rectangular pocket of transparent plastic sheet material, having two longitudinal side edges connected by shorter side edges, which is open at least along one side edge for insertion of the transparency (3) to be presented therebetween, further comprising at least one paper flap (7,8) attached to the envelope in a foldable manner to one of the longitudinal side edges of the pocket, the paper flap(s) exposing the transparency when in the unfolded position; the envelope being characterized by the paper flap(s), when in the folded position, covering at least 95% of the transparency, and by the side edge of the pocket opposite to the open side edge being welded through the superposed paper flap(s) along a desired seam line (10) by the process according to anyone of claims 1 to 6.

## Patentansprüche

1. Verfahren zum Verschweißen zweier Kunststoffolien an einer gewünschten Nahtlinie durch einen auf eine erste der Kunststoffolien aufgelegten Papierbogen mit den folgenden Schritten:
a) Einlegen der beiden Kunststoffolien (4, 5) mit dem aufgelegten Papierbogen (7, 8) zwischen eine Amboßeinrichtung in Berührung mit der zweiten Kunststoffolie (4) und eine ultraschallbetriebene Trichtereinrichtung in Berührung mit dem Papierbogen, wobei die Amboßeinrichtung eine gerändelte Oberfläche und die Trichtereinrichtung eine glatte Oberfläche hat,
b) Ausüben eines Drucks in dem Bereich von 0,2 bis 2,0 Bar zwischen der Amboßeinrichtung und der Trichtereinrichtung auf die Kunststoffolien und den Papierbogen, und
c) Aktivieren der Trichtereinrichtung durch Ultraschall mit einer Zufuhrleistung von mindestens 1,2 kW für eine Schweißzeit in dem Bereich von 80 bis 300 Millisekunden, um die beiden Kunststoffolien an der gewünschten Nahtlinie (10) miteinander zu verschweißen.

2. Verfahren zum Verschweißen transparenter Kunststoffolien nach Anspruch 1, wobei die Schweißzeit in dem Bereich von 150 bis 250 Millisekunden liegt.

3. Verfahren zum Verschweißen transparenter Kunststoffolien nach Anspruch 1, wobei die zugeführte Leistung mindestens 1,5 kW beträgt.

4. Verfahren zum Verschweißen transparenter Kunststoffolien nach Anspruch 1, wobei der Druck in dem Bereich von 0,6 bis 1,6 Bar liegt.

5. Verfahren zum Verschweißen transparenter Kunststoffolien nach Anspruch 1, wobei die gerändelte Oberfläche des Amboß durch eine Folge spitzer Pyramiden realisiert ist.

6. Verfahren zum Verschweißen transparenter Kunststoffolien nach Anspruch 1, wobei ein filzbedeckter Metallschuh zwischen den Papierbogen und die erste Kunststoffolie eingefügt ist.

7. Formartikel mit zwei an einer gewünschten Nahtlinie verschweißten Kunststoffolien und einem auf eine erste der Kunststoffolien aufgelegten Papierbogen, dadurch gekennzeichnet, daß die beiden Kunststoffolien durch den aufgelegten Papierbogen durch ein Verfahren verschweißt wurden, das die folgenden Schritte aufweist:
a) Einlegen der beiden Kunststoffolien (4, 5) mit dem aufgelegten Papierbogen (7, 8) zwischen eine Amboßeinrichtung in Berührung mit der zweiten Kunststoffolie (4) und eine ultraschallbetriebene Trichtereinrichtung in Berührung mit dem Papierbogen, wobei die Amboßeinrichtung eine gerändelte Oberfläche und die Trichtereinrichtung eine glatte Oberfläche hat,
b) Ausüben eines Drucks in dem Bereich von 0,2 bis 2,0 Bar zwischen der Amboßeinrichtung und der Trichtereinrichtung auf die Kunststoffolien und den Papierbogen, und
c) Aktivieren der Trichtereinrichtung durch Ultraschall mit einer Zufuhrleistung von mindestens 1,2 kW für eine Schweißzeit in dem Bereich von 80 bis 300 Millisekunden, um die beiden Kunststoffolien an der gewünschten Nahtlinie (10) miteinander zu verschweißen.

8. Formartikel nach Anspruch 7, wobei die beiden Kunststoffolien durch Falten einer großen Folien gebildet sind.

9. Hülle für Transparentfolien für Overheadprojektoren, wobei die Hülle (2) eine im wesentlichen rechtwinklige Tasche aus transparentem Kunststoffolienmaterial mit zwei durch kürzere Seitenkanten verbundenen Längsseitenkanten aufweist, die an mindestens einer Seitenkante zum Einfügen der zu präsentierenden Transparentfolie dazwischen offen ist, ferner mit mindestens einer Papierklappe (7, 8), die an der Hülle faltbar an einer der Längsseitenkanten der Tasche angeordnet ist, wobei die Papierklappe(n) die Transparentfolie in der nicht gefalteten Position freilegt (-legen); wobei die Hülle dadurch gekennzeichnet ist, daß die Papierklappe(n) in der gefalteten Position mindestens 95 % der Transparentfolie bedeckt (bedecken), und dadurch, daß die der offenen Seitenkante gegenüberliegende Seitenkante der Tasche durch die aufgelegte(n) Papierklappe(n) an einer gewünschten Nahtlinie (10) durch das Verfahren nach einem der Ansprüche 1 bis 6 verschweißt ist.

## Revendications

1. Procédé de soudage de deux feuilles en matière plastique, le long d'une ligne de joint désirée, à travers une feuille de papier superposée à une première desdites feuilles de plastique, comportant:
a) placer les deux feuilles de plastique (4, 5), avec la feuille de papier (7, 8) superposée, entre des moyens formant enclume en contact avec la seconde feuille de plastique (4) et des moyens formant antenne, soumis à une puissance ultrasonique, en contact avec la feuille de papier, lesdits moyens formant enclume présentant une surface moletée et lesdits moyens formant antenne présentant une surface plane,
b) soumettre les feuilles de plastique et de papier à une pression sur la plage de 0,2 à 2,0 bars entre les moyens formant enclume et les moyens formant antenne, et
c) activer les moyens formant antenne par des ultrasons d'une puissance fournie d'au moins 1,2 kW pour un temps de soudage sur la plage de 80 à 300 millisecondes pour souder ensemble les deux feuilles de plastique le long de la dite ligne de joint (10) désirée.

2. Procédé de soudage de feuilles de plastique transparentes comme dans la revendication 1, dans lequel le temps de soudage vaut de 150 à 250 millisecondes.

3. Procédé de soudage de feuilles de plastique transparentes comme dans la revendication 1, dans lequel la puissance fournie vaut au moins 1,5 kW.

4. Procédé de soudage de feuilles de plastique transparentes comme dans la revendication 1, dans lequel la pression vaut de 0,6 à 1 bar.

5. Procédé de soudage de feuilles de plastique transparentes comme dans la revendication 1, dans lequel la surface moletée de l'enclume est réalisée par une série de pyramides pointues.

6. Procédé de soudage de feuilles de plastique transparentes comme dans la revendication 1, dans lequel une garniture de métal recouvert de feutre est insérée entre la feuille de papier et la première feuille de plastique.

7. Article oeuvré comportant deus feuilles de plastique soudées le long d'une ligne de joint désirée et une feuille de papier superposée à une première desdites feuilles de plastique, caractérisé par le fait que les deux feuilles de plastiques ont été soudées, à travers la feuille de papier superposée, par un procédé comportant:
a) placer les deux feuilles de plastique (4, 5), avec la feuille de papier (7, 8) superposée, entre des moyens formant enclume en contact avec la seconde feuille de plastique (4) et des moyens formant antenne, soumis à une puissance ultrasonique, en contact avec la feuille de papier, lesdits moyens formant enclume présentant une surface moletée et lesdits moyens formant antenne présentant une surface plane,
b) soumettre les feuilles de plastique et de papier à une pression sur la plage de 0,2 à 2,0 bars entre les moyens formant enclume et les moyens formant antenne, et
c) activer les moyens formant antenne par des ultrasons d'une puissance fournie d'au moins 1,2 kW pour un temps de soudage sur la plage de 80 à 300 millisecondes pour souder ensemble les deux feuilles de plastique le long de la dite ligne de joint (10) désirée.

8. Article oeuvré selon la revendication 7, dans lequel les deux dites feuilles de plastique sont formées par pliage d'une grande feuille.

9. Enveloppe pour transparents pour épiscopes, ladite enveloppe (2) comportant une pochette substantiellement rectangulaire de matériau en feuille de plastique transparent, qui présente deux bords latéraux longitudinaux reliés par des bords latéraux plus courts, qui s'ouvre au moins le long d'un bord latéral pour insertion du transparent (3) à présenter entre elles, comportant en outre au moins un volet de papier (7, 8) attaché à l'enveloppe de façon à pouvoir se replier par rapport à l'un des bords latéraux longitudinaux de la pochette, le volet, ou les volets, de papier laissant voir le transparent en position non repliée; l'enveloppe étant caractérisée par le fait que le volet, ou les volets, de papier, en position repliée, recouvre(nt) au moins 95% du transparent et que, sur le bord latéral de la pochette opposé au bord latéral ouvert, il est soudé, ou ils sont soudés, à travers le volet, ou les volets, de papier superposé(s) le long d'une ligne de joint désirée (10) par le procédé conforme à l'une quelconque des revendications 1 à 6.
